# EUROPÄISCHE PATENTSCHRIFT

(11) **EP 3 377 300 B1**
(45) Veröffentlichungstag und Bekanntmachung des Hinweises auf die Patenterteilung: **20.01.2021**
(21) Anmeldenummer: 16808988.6
(22) Anmeldetag: 06.12.2016
(51) Int. Cl.: B29C 49/64, B29C 49/42, B29C 49/06, B29C 49/78, B29L 31/00

(54) **VORRICHTUNG UND VERFAHREN ZUM BEHANDELN VON BEHÄLTNISSEN MIT ÜBERWACHUNG VON ANTRIEBSMOTOREN**
APPARATUS AND METHOD FOR HANDLING CONTAINERS, WITH MONITORING OF DRIVE MOTORS
DISPOSITIF ET PROCÉDÉ DE TRAITEMENT DE CONTENANTS AVEC CONTRÔLE DE MOTEURS D'ENTRAÎNEMENT

(30) Priorität: 16.12.2015 DE 102015122003
(43) Veröffentlichungstag der Anmeldung: 26.09.2018
(73) Patentinhaber: Krones AG, 93073 Neutraubling (DE)
(72) Erfinder: FINGER, Dieter, 93073 Neutraubling (DE); KITZINGER, Thomas, 93073 Neutraubling (DE)
(74) Vertreter: Bittner, Bernhard
(86) Internationale Anmeldenummer: PCT/EP2016/079874
(87) Internationale Veröffentlichungsnummer: WO 2017/102432

(56) Entgegenhaltungen:
- EP-A1- 2 253 452
- EP-A1- 2 439 490
- EP-A1- 2 862 694
- US-B2- 8 684 725

## Beschreibung

Die vorliegende Erfindung bezieht sich auf eine Vorrichtung und ein Verfahren zum Behandeln von Behältnissen. Die Erfindung wird unter Bezugnahme auf einen Ofen beschrieben, der Kunststoffvorformlinge erwärmt. Es wird jedoch darauf hingewiesen, dass die Erfindung auch bei anderen Maschinen oder Verfahren Anwendung finden kann, insbesondere bei solchen Maschinen, welche Schrittmotoren zur Einstellung von Drehstellungen einsetzen und/oder welche eine Vielzahl von im Wesentlichen gleichartigen Antrieben aufweisen, welche mechanische Bewegungen, insbesondere Drehbewegungen und/oder Linearbewegungen (wie beispielsweise Hubbewegungen) durchführen.

Aus dem Stand der Technik ist es seit langem bekannt, Kunststoffvorformlinge zu erwärmen und diese erwärmten Kunststoffvorformlinge mittels einer Umformungseinrichtung, wie beispielsweise einer Streckblasmaschine, zu Kunststoffbehältnissen umzuformen. Zu diesem Zweck werden im Stand der Technik die Kunststoffvorformlinge durch einen Ofen gefahren und während dieses Transports von insbesondere stationär angeordneten Heizelementen erwärmt. Dabei sind aus dem Stand der Technik auch Vorrichtungen und Verfahren bekannt, bei denen auf die Kunststoffvorformlinge ein sich in Umfangsrichtung änderndes Wärmeprofil aufgebracht wird. Durch derartige Verfahren kann erreicht werden, dass in einem nachfolgenden Blasvorgang Behältnisse erzeugt werden, welche ein von einem kreisförmigen Profil abweichendes Profil aufweisen.

Die EP 2 862 694 A1 zeigt eine Vorrichtung zum Erwärmen von Kunststoffvorformlingen mit einer Transporteinrichtung, welche die Vorformlinge entlang eines vorgegeben Transportpfades transportiert, wobei die Transporteinrichtung ein umlaufendes Transportmittel aufweist und an diesem Transportmittel eine Vielzahl von Halteelementen zum Halten der Vorformlinge angeordnet ist und diese Halteelemente bezüglich einer Längsrichtung der zu drehenden Vorformlinge bewegbar sind.

Die EP 2 256 452 A1 offenbart eine Vorrichtung und ein Verfahren zum Erwärmen von Kunststoffvorformlingen mit einer Transporteinrichtung, welche die Vorformlinge entlang eines vorgegebenen Transportpfades transportiert und mit einer Heizeinrichtung, welche entlang dieses Transportpfades angeordnet ist und die Vorformlinge erwärmt. Dabei ist ein Rotationsantrieb vorgesehen, welcher die Vorformlinge um deren Längsrichtung dreht.

Aus der EP 2 439 490 A1 geht eine Vorrichtung zum Erkennen einer geometrischen Lage von Kunststoffbehältnissen hervor. Die Behältnisse weisen einen Grundkörper und einen Gewindebereich auf. Eine Bildaufnahmeeinrichtung ist derart angeordnet, dass sie das Kunststoffbehältnis im Wesentlichen entlang dessen Längsrichtung beobachtet. Die Vorrichtung weist darüber hinaus eine Beleuchtungseinrichtung auf, welche wenigstens einen von der Bildaufnahmeeinrichtung beobachteten Bereich beleuchtet.

Im Stand der Technik sind derzeit zwei verschiedene Verfahren bekannt, um ein derartiges wechselndes Wärmeprofil aufzubringen. So ist es einerseits bekannt, in einem sogenannten "preferential heating" - Verfahren ein radial ungleiches Heizprofil auf den Kunststoffvorformling im Heizofen aufzubringen. Auch ist es aus dem Stand der Technik bekannt, durch nachfolgende Einrichtungen bzw. nach dem Ofen in einem Zwischenmodul den Kunststoffvorformling abschnittsweise, bzw. partiell, abzukühlen. Durch dieses ungleiche Heizprofil ist es möglich, ovale Formflaschen zu produzieren.

Wenn neben der ovalen Flasche auch ein ovaler Verschluss verwendet werden soll, sollte nach dem Verschließen der Verschluss zu dem Behältnis ausgerichtet sein. Aus diesem Grund muss der Gewindegang des Behältnisses immer genau an der gleichen Stelle beginnen. Um dies zu realisieren, ist es im Stand der Technik bekannt, dass der Kunststoffvorformling eine Markierung, beispielsweise in Form einer Kerbe, aufweist. Eine erste Kamera vor dem eigentlichen Behandlungsstern vermisst die Winkelposition der Kerbe. Anschließend wird der Dorn mit dem Kunststoffvorformling mit einem Antrieb, wie etwa einem Schrittmotor, der bevorzugt in jeder Station verbaut ist, ausgerichtet. Im Anschluss beginnt der Prägevorgang (beispielsweise mit Kühlplatten). Nach einer partiellen Abkühlung wird der Kunststoffvorformling noch einmal weitergedreht, sodass der Kunststoffvorformling zu einer bestimmten Position, beispielsweise der Trennlinie der Blasform ausgerichtet ist.

Dabei ist es wichtig, dass ein Fehler an einer Station, der dazu führt, dass der Kunststoffvorformling nicht richtig gedreht wird (zum Beispiel ein festsitzendes Lager), sicher erkannt wird. Aus dem internen Stand der Technik der Anmelderin ist es hierzu bekannt, dass eine zweite Kamera nach dem Behandlungsstern verbaut wird und die Winkelposition der Markierung kontrolliert. Daneben wäre es möglich, jede einzelne Station bzw. jede Halteeinrichtung mit einem Gebersystem auszustatten, welches die Ausrichtung kontrolliert. Diese Lösungen sind jedoch jeweils mit sehr hohen Kosten verbunden.

Der vorliegenden Erfindung liegt daher die Aufgabe zugrunde, eine Vorrichtung und ein Verfahren zur Verfügung zu stellen, welche eine derartige Überwachung bei solchen Vorrichtungen einfacher und/oder kostengünstiger erlauben. Diese Aufgaben werden erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zur Behandlung von Behältnissen weist eine Transporteinrichtung auf, welche die Behältnisse entlang eines vorgegebenen Transportpfads transportiert. Dabei ist an der Transporteinrichtung eine Vielzahl von Halteeinrichtungen zum Halten der Behältnisse angeordnet. Weiterhin weist die Vorrichtung eine Dreheinrichtung auf, welche die Kunststoffvorformlinge hinsichtlich einer Drehstellung bezüglich deren Längsachsen dreht.

Erfindungsgemäß weist die Dreheinrichtung eine elektrisch betriebene Antriebseinrichtung zur Erzeugung der Drehbewegung der Kunststoffvorformlinge bezüglich deren Längsrichtungen auf sowie wenigstens eine Messeinrichtung, welche wenigstens zeitweise eine elektrische Kenngröße dieser Antriebseinrichtung bestimmt. Insbesondere bestimmt die Messeinrichtung die elektrische Kenngröße, um hieraus abzuleiten, ob die Dreheinrichtung in der Lage ist, eine Soll-Drehbewegung durchzuführen.

Es wird darauf hingewiesen, dass es sich bei den hier beschriebenen Behältnissen sowohl um leere Behältnisse, um volle Behältnisse aber insbesondere auch um sogenannte Kunststoffvorformlinge, aus denen später Kunststoffbehältnisse wie Kunststoffflaschen gefertigt werden, handeln kann. Auch können diese Behältnisse aus unterschiedlichen Materialien bestehen wie insbesondere aber nicht ausschließlich Kunststoff oder Glas.

Es wird daher vorgeschlagen, dass eine elektrisch betriebene Antriebseinrichtung, wie insbesondere, aber nicht ausschließlich, ein Elektromotor, insbesondere ein Servomotor vorgesehen ist, der die Kunststoffvorformlinge, insbesondere zu deren Ausrichtung bezüglich deren Längsrichtungen dreht. Aus der genannten elektrischen Kenngröße können bevorzugt Rückschlüsse über ein ordnungsgemäßes Verhalten der Antriebseinrichtung und damit auch über eine ordnungsgemäße Drehung geschlossen werden. Vorteilhaft ist jeder der besagten Halteeinrichtungen eine derartige Dreheinrichtung zugeordnet. Vorteilhaft weist auch jede Antriebseinrichtung eine Messeinrichtung auf, welche die genannte elektrische Kenngröße bestimmt. Daneben wäre es auch denkbar, dass eine Messeinrichtung vorgesehen ist, welche zur Messung jeder einzelnen Antriebseinrichtung geeignet und bestimmt ist.

Bei einer weiteren vorteilhaften Ausführungsform weist die Vorrichtung eine erste Heizeinrichtung auf, welche entlang des Transportpfads angeordnet ist und welche die Kunststoffvorformlinge während ihres Transports entlang des Transportpfads erwärmt. Bei dieser Ausgestaltung handelt es sich bei der Vorrichtung um einen Ofen, insbesondere einen Infrarotofen, der üblicherweise einer Streckblasmaschine vorgeschaltet ist, und der dazu dient, die Kunststoffvorformlinge auf eine Temperatur zu erwärmen, bei der ein Streckblasvorgang durchgeführt werden kann.

Bevorzugt weist die Vorrichtung wenigstens ein stromabwärts bezüglich der Heizeinrichtung angeordnetes Kontaktierungselement auf, um eine Wandung der Kunststoffvorformlinge mit einem sich in einer Umfangsrichtung und/oder Längsrichtung des Kunststoffvorformlings ändernden Temperaturprofil zu beaufschlagen.

Vorteilhaft berührt dabei dieses Kontaktierungselement mit einer Kontaktfläche einen vorgegebenen und in der Umfangsrichtung und/oder Längsrichtung der Kunststoffvorformlinge begrenzten Bereich der Wandung der Kunststoffvorformlinge, um diesen Bereich mit einem gegenüber einem von dem Kontaktierungselement nicht berührten Bereich unterschiedlichen Temperaturprofil zu beaufschlagen.

Dabei weist die Vorrichtung weiterhin eine Zustelleinrichtung auf, welche das Kontaktierungselement in einer vorgegebenen Richtung auf den Kunststoffvorformling zustellt.

Alternativ wäre es auch denkbar, dass eine Drehung der Kunststoffvorformlinge so gesteuert wird, dass bestimmte Bereiche mehr erwärmt werden, als andere. Auf diese Weise kann beispielsweise die Drehung so gesteuert sein, dass in bestimmten Drehstellungen der Kunststoffvorformling längere Zeit in der Nähe der Heizeinrichtung verweilt und somit stärker erwärmt wird.

Bei einer weiteren vorteilhaften Ausführungsform wäre es möglich, dass die Vorrichtung einen ersten Transportabschnitt aufweist, innerhalb dessen alle Kunststoffvorformlinge gleichförmig erwärmt werden und anschließend einen zweiten Transportabschnitt, innerhalb dessen die Kunststoffvorformlinge mit einem unterschiedlichen Temperaturprofil beaufschlagt werden. Dabei ist es insbesondere möglich, dass die oben erwähnte Dreheinrichtung zwischen diesen Transportabschnitten angeordnet ist. Dabei ist es insbesondere auch möglich, dass an dem zweiten Transportabschnitt wenigstens eine zweite Heizeinrichtung angeordnet ist, welche die Kunststoffvorformlinge während ihres Transports entlang des zweiten Transportabschnitts erwärmt. Vorteilhaft handelt es sich, wie oben erwähnt, bei dem Behältnis um ein Kunststoffbehältnis und insbesondere um einen Kunststoffvorformling. Die Vorrichtung ist jedoch auch anstelle von Behältnissen auf andere Objekte, wie beispielsweise Verschlüsse, anwendbar, welche beispielsweise auf Behältnisse geschraubt werden. Daher ist die vorliegende Erfindung auch für Vorrichtungen wie Blasformmaschinen, Füllmaschinen, Etikettiermaschinen und dergleichen anwendbar. Insbesondere kommt eine Anwendung der Erfindung dann in Betracht, wenn eine Vielzahl von Behandlungsstationen vorgesehen ist und diese Behandlungsstationen jeweils elektrische Antriebe, bevorzugt Drehantriebe, Hubantriebe oder dergleichen aufweisen.

Bei einer weiteren vorteilhaften Ausführungsform weist die Vorrichtung eine Prozessoreinrichtung auf, welche aufgrund von der Messeinrichtung gemessenen Kenngröße ein Signal ausgibt, welches einen Rückschluss auf eine von der Antriebseinrichtung bewirkte Drehbewegung der Kunststoffvorformlinge ermöglicht. So kann beispielsweise aus dem elektrischen Messwert geschlossen werden, dass sich eine bestimme Antriebseinrichtung nicht oder nur wenig gedreht hat, weil beispielsweise eine Verklemmung vorliegt.

Bei einer weiteren vorteilhaften Ausführungsform weist die Vorrichtung wenigstens eine Vergleichseinrichtung auf, welche die von der Messeinrichtung gemessenen Werte mit wenigstens einem Vergleichswert vergleicht. Auf Basis dieses Vergleiches kann geschlossen werden, ob bei der jeweiligen Antriebseinrichtung ein Fehler wie etwa eine Verklemmung vorliegt. Dabei ist es möglich, dass diese Vergleichswerte individuell für jede einzelne Antriebseinrichtung abgespeichert sind. Vorteilhaft weist die Vorrichtung auch eine Speichereinrichtung zum Abspeichern der von der Messeinrichtung gemessenen Werte auf.

Bei einer weiteren vorteilhaften Ausführungsform ist die Antriebseinrichtung, insbesondere die elektromotorische Antriebseinrichtung, geberlos ausgebildet. Damit weisen die einzelnen Antriebseinrichtungen bevorzugt keinen sogenannten Drehgeber auf. Auf diese Weise können die Kosten reduziert werden.

Bei einer weiteren vorteilhaften Ausführungsform ist die Prozessoreinrichtung und/oder eine Steuereinrichtung der Vorrichtung so ausgelegt, dass zu einem bestimmten Zeitabschnitt bewusst eine Beschleunigung des Antriebs erzeugt wird, um in dieser Phase Fehler, wie beispielsweise ein Verklemmen zu erkennen.

Die hier beschriebenen Antriebseinrichtungen, wie insbesondere Schrittmotoren, drehen pro Ansteuerschritt immer einen gewissen Winkel weiter. Damit ist jedoch für die eigentliche Positionierung kein Gebersignal erforderlich. Wenn es also, wie hier beschrieben, möglich ist, für die Kontrolle der Ausrichtung ein anderes Verfahren zu finden, wie hier über die Messung der elektrischen Kenngröße, kann auf die teuren Komponenten wie Kamerageber oder Geberkarte verzichtet werden.

Bevorzugt ist die elektrische Kenngröße aus einer Gruppe von Kenngrößen ausgewählt, welche eine elektrische Spannung, einen elektrischen Strom, eine induzierte Spannung, eine elektromotorische Kraft, einen elektrischen Widerstand oder dergleichen enthält. Anhand dieser elektrischen Kenngrößen ist es möglich, festzustellen, ob der Motor eine gewünschte Soll-Drehung erreicht. Bei einem drehenden Motor wird in der Wicklung des Motors eine Spannung, die sogenannte gegenelektromotorische Kraft (Gegen-EMK), induziert, die der angelegten Spannung entgegenwirkt. Diese Gegen-EMK ist umso höher, je höher die Drehzahl ist.

Die Gegen-EMK kann zu deren Steuerung und Geschwindigkeitsregelung herangezogen werden. Die Differenz zwischen der angelegten Spannung und der Gegen-EMK kann dabei bevorzugt an einem ohmschen Widerstand der Wicklung anliegen. Auf diese Weisung prägt sich der Wicklungsstrom ein.

Falls die angelegte Spannung und auch der gemessene Wicklungsstrom bekannt sind, lässt sich in umgekehrter Richtung auch die Drehzahl berechnen. Auf diese Weise kann eine Steuerung hierauf reagieren und/oder einen auftretenden Fehler dem Bediener anzeigen.

Vorteilhaft ist die Messeinrichtung in eine Endstufe zur Ansteuerung der Antriebe integriert. Diese Messeinrichtung dient damit hier zur Erfassung von elektrischen Kenngrößen.

Falls festgestellt wird, dass ein bestimmter Antrieb, bzw. eine bestimmte Station einen Mangel aufweist, der beispielsweise zu einem festsitzenden Dorn bzw. einer festsitzenden Halteeinrichtung führt, wird die Gegen-EMK absinken und der Wicklungsstrom ansteigen. Dieser Anstieg kann messtechnisch erkannt werden und die Steuerung kann hierauf reagieren und den Fehler dem Bediener anzeigen.

Vorteilhaft handelt es sich bei den Halteeinrichtungen um Dorne, bzw. Haltedorne, welche in die Mündungen der Kunststoffvorformlinge einführbar sind.

Bei einer weiteren vorteilhaften Ausführungsform weist die Vorrichtung eine Drehpositionserfassungseinrichtung auf, welche eine Rotationsstellung der Kunststoffvorformlinge bezüglich deren Längsachse erfasst. Dabei kann es sich beispielsweise um eine optische Drehpositionserfassungseinrichtung handeln. Diese kann beispielsweise die Position einer bestimmten Markierung an dem Tragring des Kunststoffvorformlings erfassen. Auf Basis dieser erfassten Position kann ermittelt werden, um welchen Drehwinkel individuell jeder Kunststoffvorformling weiterzudrehen ist, damit eine einheitliche Drehstellung aller Kunststoffvorformlinge erreicht wird.

Bei einer weiteren vorteilhaften Ausführungsform handelt es sich bei der Dreheinrichtung um eine Ausrichteinrichtung, welche die Kunststoffvorformlinge hinsichtlich einer Drehstellung bezüglich deren Längsrichtung ausrichtet.

Bei einer weiteren vorteilhaften Ausführungsform ist diese Ausrichteeinrichtung entlang eines Transportpfads der Kunststoffvorformlinge zwischen dem ersten Transportabschnitt und dem zweiten Transportabschnitt angeordnet.

Bei einer weiteren vorteilhaften Ausführungsform weist die Transporteinrichtung einen umlaufenden Träger auf sowie eine Vielzahl von Halteeinrichtungen, die an diesen Träger angeordnet ist. Vorteilhaft ist wenigstens ein Transportabschnitt als Heizgasse ausgebildet, durch welche die Kunststoffvorformlinge zu deren Erwärmung gefördert werden. Dabei ist es möglich, dass diese Halteeinrichtungen auch Hubbewegungen durchführen können, um so in die Mündungen der Kunststoffvorformlinge eingeführt zu werden.

Bei einer weiteren vorteilhaften Ausführungsform weist die Ausrichteinrichtung eine Vielzahl von elektromotorischen Antrieben zum Drehen der Kunststoffvorformlinge bezüglich deren Längsrichtungen auf.

Vorteilhaft ist, wie oben erwähnt, eine Vielzahl von Halteelementen bzw. Halteeinrichtungen zum Halten der Kunststoffvorformlinge vorgesehen. Auf diese Weise ist ein vereinzelter Transport der Kunststoffvorformlinge möglich.

Die vorliegende Erfindung ist weiterhin auf ein Verfahren zum Behandeln von Behältnissen gerichtet, wobei die Behältnisse mit einer Vielzahl von Halteeinrichtungen gehalten werden und entlang eines vorgegebenen Transportpfads transportiert werden, wobei die Behältnisse mittels einer Dreheinrichtung hinsichtlich einer Drehstellung bezüglich ihrer Längsrichtung gedreht werden.

Erfindungsgemäß weist die Dreheinrichtung eine elektrisch betriebene Antriebseinrichtung zur Erzeugung der Drehbewegung der Halteeinrichtungen mit den daran angeordneten Behältnissen bezüglich der Längsrichtungen der Behältnisse auf und mittels einer Messeinrichtung wird wenigstens zeitweise wenigstens eine elektrische Kenngröße dieser Antriebseinrichtung erfasst.

Vorteilhaft werden die Antriebseinrichtungen geberlos, das heißt insbesondere ohne einen Drehgeber angesteuert. Auf diese Weise kann auch verfahrensseitig eine Kostenreduzierung erreicht werden.

Es wird daher auch verfahrensseitig vorgeschlagen, dass ein Fehler der Antriebe, insbesondere mittels der elektrischen Kenngröße, erfasst wird. Bevorzugt wird daher auf Basis der elektrischen Kenngröße ermittelt, ob die Antriebseinrichtung eine Soll-Drehbewegung erzeugt bzw. durchgeführt hat.

Bei einem weiteren bevorzugten Verfahren wird die elektrische Größe während einer hohen Drehzahl der Antriebseinrichtung ermittelt. Dabei handelt es sich insbesondere um Drehzahlen zwischen 300 und 1500U/min, bevorzugt zwischen 400 und 1200U/min und besonders bevorzugt zwischen 500 und 1000U/min. Da die Gegen-EMK mit steigender Drehzahl ansteigt, wird die oben beschriebene Diagnose bevorzugt bei einer hohen Drehzahl durchgeführt, da die Erkennung dann genauer ist und das Risiko minimiert wird, dass es zu Fehlalarmen kommt. Dabei wird jedoch diese Diagnose vorteilhaft nicht während des eigentlichen Prägevorgangs bzw. des Vorgangs, bei dem die Kunststoffvorformlinge temperiert werden, durchgeführt.

Vorteilhaft wird die elektrische Kenngröße der Antriebseinrichtung wenigstens zeitweise in einem Zeitraum erfasst, in dem sich an der der Antriebseinrichtung zugeordneten Halteeinrichtung kein Behältnis befindet. Üblicherweise werden die Behältnisse mittels eines Zuführsterns der Erwärmungseinrichtung zugeführt, anschließend während ihres Transports mit der Transporteinrichtung erwärmt und schließlich in einem erwärmten Zustand abgegeben. Da es sich, wie oben erwähnt, bevorzugt um ein umlaufendes Transportmittel handelt, gibt es einen gewissen Zwischenbereich, in dem sich an den Halteeinrichtungen keine Kunststoffbehältnisse befinden. Innerhalb dieses Abschnitts werden bevorzugt die hier beschriebenen Messungen durchgeführt.

Bevorzugt erfolgt der besagte Test dabei in einem Bereich zwischen einem Auslauf- und einem Einlaufstern, wenn der Kunststoffvorformling gerade abgezogen wurde und ein neuer Kunststoffvorformling noch nicht aufgesteckt wurde. Damit messen die Messeinrichtungen bevorzugt in einem unbesetzten Zustand der einzelnen Halteeinrichtungen. In diesem Bereich kann die Halteeinrichtung, beispielsweise der Haltedorn, sehr schnell auf eine hohe Geschwindigkeit beschleunigt und auch sofort wieder abgebremst werden. Während dieses Vorgangs wird bevorzugt mit dem beschriebenen Verfahren ein Festsitzen der Halteeinrichtung kontrolliert.

Weitere Vorteile und Ausführungsformen ergeben sich aus der beigefügten Zeichnung. Darin zeigt:

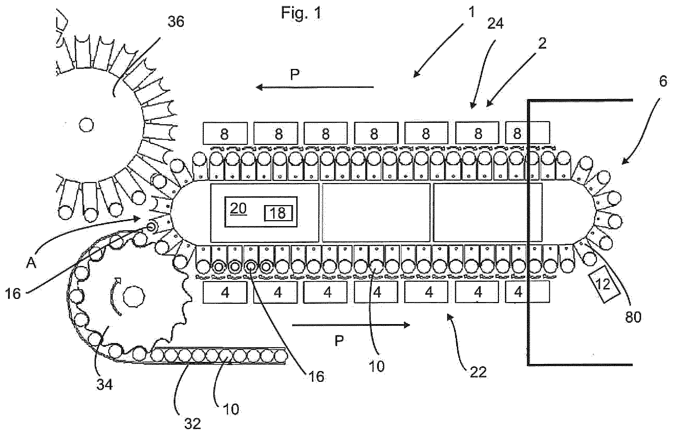

- Fig. 1: eine schematische Darstellung einer Vorrichtung zum Erwärmen von Kunststoffvorformlingen.

Figur 1 zeigt eine schematische Darstellung zur Veranschaulichung der vorliegenden Erfindung. Es wird darauf hingewiesen, dass nicht alle in den Figuren gezeigten Merkmale wesentlich für die Erfindung sind. Auch handelt es sich hierbei um eine beispielhafte Darstellung. Die Erfindung könnte, wie oben gesagt, auch auf andere Vorrichtungen Anwendung finden, insbesondere solche Vorrichtungen, welche eine Vielzahl von Drehantrieben aufweisen, welche beispielsweise auch Behältnisse wie Flaschen drehen. Dabei bezieht sich das Bezugszeichen 1 auf die Vorrichtung zum Erwärmen von Kunststoffvorformlingen 10. Diese Vorrichtung 1 weist dabei eine Transporteinrichtung 2 auf, entlang derer die Kunststoffvorformlinge 10 transportiert werden, genauer entlang des Transportpfades P transportiert werden.

Zu diesem Zwecke werden die Kunststoffvorformlinge 10 zunächst über eine Zuführrinne 32 und einen Eintaktstern 34 zugeführt, durchlaufen dann die Transporteinrichtung 2 und werden schließlich von einem Transferstern 36 übernommen und an eine (nicht gezeigte) Blasformmaschine übergeben. Der Transportpfad P weist dabei einen ersten Transportabschnitt 22 und einen zweiten Transportabschnitt 24 auf. Zwischen diesen beiden Transportabschnitten 22 und 24 kann eine Ausrichteinrichtung 6 zum Ausrichten der einzelnen Kunststoffvorformlinge angeordnet sein. In diesem Bereich der Vorrichtung sind üblicherweise keine Heizelemente angeordnet. Bei der in Fig. 1 gezeigten Ausführungsform findet ein sog. preferential heating der Kunststoffvorformlinge statt. Es wäre jedoch auch denkbar, dass die Vorrichtung die Kunststoffvorformlinge einheitlich erwärmt und erst nach dieser Erwärmung, wie oben dargestellt, bestimmte Bereiche der Kunststoffvorformlinge temperiert, z.B. gekühlt werden. In diesem Fall könnte sich die Ausrichteinrichtung auf stromabwärts der Vorrichtung 1 befinden.

Entlang des ersten Transportabschnittes 22 ist eine Vielzahl von ersten Heizeinrichtungen 4 angeordnet und an dem zweiten Transportabschnitt 24 ist eine Vielzahl von zweiten Heizeinrichtungen 8 angeordnet. Bei diesen Heizeinrichtungen kann es sich insbesondere um Infrarot- Heizelemente handeln, etwa um Röhren, welche sich abschnittsweise entlang des Transportpfades der Kunststoffvorformlinge erstrecken.

Man erkennt an den kleinen Pfeilen, dass die Kunststoffvorformlinge während des Transports entlang des ersten Transportabschnitts auch bezüglich ihrer Längsachse gedreht werden. Auch im Bereich des zweiten Transportabschnitts findet eine derartige Drehung der Kunststoffvorformlinge statt. Allerdings findet im Bereich des ersten Transportabschnitts 22 eine gleichmäßige Drehung der Kunststoffvorformlinge statt, d.h. diese werden in Umfangsrichtung gleichmäßig erwärmt und im Bereich des zweiten Transportabschnitts 24 findet bevorzugt eine ungleichmäßige Drehung statt, so dass die Kunststoffvorformlinge in einer Umfangsrichtung bezüglich der Längsrichtung der Kunststoffvorformlinge ungleichmäßig erwärmt werden. Das Bezugszeichen 80 kennzeichnet schematisch eine Halteeinrichtung, welche zum Halten der Kunststoffvorformlinge dient. Die Längsrichtung der Kunststoffvorformlinge verläuft in Fig. 1 senkrecht zu der Figur. Diese Halteeinrichtung kann einen (nicht gezeigten) Dorn aufweisen, der in die Mündungen der Kunststoffvorformlinge einführbar ist. Auch kann dieser Dorn (insbesondere schaltbare) Klemmmittel aufweisen, welche bewirken, dass der Kunststoffvorformling zumindest vorübergehend an dem Haltedorn gehalten wird.

Die Bezugszeichen 16 beziehen sich auf Antriebseinrichtungen, welche zum drehenden Antreiben der Kunststoffvorformlinge bzw. deren Halteeinrichtungen dienen. Dabei ist jeder Halteeinrichtung eine derartige Antriebseinrichtung 16 zugeordnet, so dass sich die einzelnen Halteeinrichtungen individuell drehen lassen. Bei den Antriebseinrichtungen 16 handelt es sich insbesondere um Elektromotoren und insbesondere um Servomotoren.

Das Bezugszeichen 12 kennzeichnet grob schematische eine Erfassungseinrichtung, welche eine Drehstellung der einzelnen Kunststoffvorformlinge 10 erfasst. Bevorzugt handelt es sich hier um eine optische Erfassungseinrichtung, wie etwa eine Kamera, welche Bilder der Kunststoffvorformlinge aufnimmt. Auf Basis dieser Bilder kann auf eine momentane Drehstellung der einzelnen Kunststoffvorformlinge geschlossen werden. In Reaktion auf die so erfasste Drehstellung der Kunststoffvorformlinge wiederum kann an die betreffende Antriebseinrichtung die Anweisung ausgegeben werden, um welchen Winkel die betreffende Halteeinrichtung und damit der an dieser betreffenden Halteeinrichtung angeordnete Kunststoffvorformling zu drehen ist.

Das Bezugszeichen 18 kennzeichnet grob schematisch eine Messeinrichtung, welche wenigstens eine elektrische Kenngröße der einzelnen Antriebseinrichtungen bestimmt. Das Bezugszeichen 20 kennzeichnet eine Prozessoreinrichtung, welche aufgrund der von der Messeinrichtung gemessenen Daten bestimmt, ob die Antriebseinrichtung eine bestimmte Solldrehung ausgeführt hat und/oder in der Lage ist, bestimmte Solldrehungen der Halteeinrichtungen und/oder der daran angeordneten Kunststoffvorformlinge durchzuführen. Insbesondere vergleicht dabei die Prozessoreinrichtung die von der Messeinrichtung bestimmten elektrischen Werte mit Sollgrößen, etwa um daraus eine Drehzahl der Antriebseinrichtung zu ermitteln. Allerdings kann es auch ausreichend sein, nicht die genaue Drehzahl der Antriebseinrichtungen zu ermitteln sondern lediglich die Aussage zu treffen, ob die Antriebseinrichtung ordnungsgemäß dreht oder nicht.

Das Bezugszeichen A kennzeichnet einen Bereich entlang des Transportpfads der Kunststoffvorformlinge 10, in dem die Messeinrichtung bevorzugt die elektrische Kenngröße bestimmt. In dem mit A gekennzeichneten Bereich sind die einzelnen Halteeinrichtungen nicht mit Kunststoffvorformlingen 10 bestückt, da in diesem Bereich gerade die erwärmten Kunststoffvorformlinge an den Transferstern abgegeben wurden und neue Kunststoffvorformlinge noch nicht aufgenommen wurden.

In diesem Bereich A werden die Halteeinrichtungen, beispielsweise Haltedorne auf eine hohe Umdrehungszahl beschleunigt und anschließend wieder abgebremst. In dieser Phase werden die elektrischen Kenngrößen, wie etwa die Gegen EMK gemessen. Dabei ist es möglich, dass die Messung in jedem Umlauf der Halteeinrichtungen vorgenommen wird. Es wäre jedoch auch denkbar, die Messung nur in bestimmten Zeitabständen durchzuführen oder in Abhängigkeit von einer Betriebssituation, etwa nach einer Inbetriebnahme der Maschine.

Bevorzugt werden die einzelnen Messungen individuell für jede einzelne Antriebseinrichtung gemessen.

### Bezugszeichenliste

- 1: Vorrichtung
- 2: Transporteinrichtung
- 4: erste Heizeinrichtungen
- 6: Ausrichteinrichtung
- 8: zweite Heizeinrichtungen
- 10: Kunststoffvorformlinge
- 12: Erfassungseinrichtung
- 16: Antriebseinrichtung
- 18: Halteelement
- 22: erster Transportabschnitt
- 24: zweiter Transportabschnitt/Heizabschnitt
- 32: Zuführrinne
- 34: Eintaktstern
- 36: Transferstern
- 80: Halteeinrichtung, Spindel
- A: Messbereich
- P: Transportpfad

## Patentansprüche

1. Vorrichtung (1) zur Behandlung von Behältnissen (10) mit einer Transporteinrichtung (2), welche die Behältnisse (10) entlang eines vorgegebenen Transportpfads (P) transportiert, wobei an der Transporteinrichtung (2) eine Vielzahl von Halteeinrichtungen (80) zum Halten der Behältnisse (10) angeordnet ist, wobei die die Vorrichtung wenigstens eine Dreheinrichtung aufweist, welche die Kunststoffvorformlinge(10) hinsichtlich einer Drehstellung bezüglich deren Längsrichtungen dreht
**dadurch gekennzeichnet, dass**
die Dreheinrichtung (6) eine elektrische betriebene Antriebseinrichtung (16) zur Erzeugung der Drehbewegung der Kunststoffvorformlinge bezüglich deren Längsrichtungen aufweist sowie wenigstens eine Messeinrichtung (18), welche wenigstens zeitweise wenigstens eine elektrische Kenngröße dieser Antriebseinrichtung (16) bestimmt, wobei die elektrische Kenngröße aus einer Gruppe von Kenngrößen ausgewählt ist, welche eine elektrische Spannung, einen elektrischen Strom, eine induzierte Spannung, eine elektromotorische Kraft, eine gegenelektromotorische Kraft (EMK) einen elektrischen Widerstand oder dergleichen enthält.

2. Vorrichtung (1) nach Anspruch 1,
**dadurch gekennzeichnet, dass**
die Vorrichtung einer erste Heizeinrichtung (4) aufweist, welche entlang des Transportpfads (P) angeordnet und welche die Kunststoffvorformlinge (10) während ihres Transports entlang des Transportpfads (P) erwärmt.

3. Vorrichtung (1) nach wenigstens einem der vorangegangenen Ansprüche,
**dadurch gekennzeichnet, dass**
die Vorrichtung (1) eine Prozessoreinrichtung (20) aufweist, welche aufgrund der von der Messeinrichtung (18) gemessenen Kenngröße ein Signal ausgibt, welches einen Rückschluss auf eine von der Antriebseinrichtung (16) bewirkte Drehbewegung der Kunststoffvorformlinge ermöglicht.

4. Vorrichtung (1) nach wenigstens einem der vorangegangenen Ansprüche,
**dadurch gekennzeichnet, dass**
die Antriebseinrichtung geberlos ausgebildet ist.

5. Vorrichtung (1) nach wenigstens einem der vorangegangenen Ansprüche,
**dadurch gekennzeichnet, dass**
die Vorrichtung (1) eine Drehpositionserfassungseinrichtung (12) aufweist, welche eine Rotationsstellung der Kunststoffvorformlinge bezüglich ihrer Längsachse erfasst.

6. Vorrichtung (1) nach wenigstens einem der vorangegangenen Ansprüche,
**dadurch gekennzeichnet, dass**
die Ausrichteinrichtung eine Vielzahl von motorischen Antrieben zum Drehen der Kunststoffvorformlinge (10) bezüglich deren Längsrichtung aufweist.

7. Vorrichtung (1) nach wenigstens einem der vorangegangenen Ansprüche,
**dadurch gekennzeichnet, dass**
die Vorrichtung (1) eine Vielzahl von Halteeinrichtungen (80) zum Halten der Kunststoffvorformlinge (10) aufweist.

8. Verfahren zum Behandeln von Behältnissen (10), wobei die Behältnisse (10) mit einer Vielzahl von Halteeinrichtungen (80) gehalten werden und entlang eines vorgegebenen Transportpfades (P) transportiert werden wobei die Behältnisse (10) mittels einer Dreheinrichtung (6) hinsichtlich einer Drehstellung bezüglich ihrer Längsrichtung gedreht werden.
**dadurch gekennzeichnet, dass**
die Dreheinrichtung (6) eine elektrische betriebene Antriebseinrichtung (16) zur Erzeugung der Drehbewegung der Halteeinrichtungen mit den daran angeordneten Behältnissen (10) bezüglich der Längsrichtungen der Behältnisse (10) aufweist und mittels einer Messeinrichtung (18) wenigstens zeitweise wenigstens eine elektrische Kenngröße dieser Antriebseinrichtung (16) erfasst wird, wobei die elektrische Kenngröße aus einer Gruppe von Kenngrößen ausgewählt ist, welche eine elektrische Spannung, einen elektrischen Strom, eine induzierte Spannung, eine elektromotorische Kraft, eine gegenelektromotorische Kraft (EMK) einen elektrischen Widerstand oder dergleichen enthält.

9. Verfahren nach Anspruch 8,
**dadurch gekennzeichnet, dass**
auf Basis der elektrischen Kenngröße ermittelt wird, ob die Antriebseinrichtung eine Soll- Drehbewegung erzeugt hat.

10. Verfahren nach wenigstens einem der vorangegangenen Ansprüche,
**dadurch gekennzeichnet, dass**
die elektrische Kenngröße während einer hohen Drehzahl der Antriebseinrichtung durchgeführt wird.

11. Verfahren nach wenigstens einem der vorangegangenen Ansprüche,
**dadurch gekennzeichnet, dass**
die elektrische Kenngröße der Antriebseinrichtung wenigstens zeitweise in einem Zeitraum erfasst wird, in dem sich an der der Antriebseinrichtung (16) zugeordneten Halteeinrichtung (80) kein Behältnis befindet.

## Claims

1. System (1) for processing containers (10) with a transport device (2) which transports the containers (10) along a predetermined transport path (P), wherein a plurality of holding devices (80) for holding the containers (10) is arranged on the transport device (2), wherein the system has at least one rotating device which rotates the plastic parisons (10) with regard to a rotational position with respect to the longitudinal directions thereof,
**characterised in that**
the rotating device (6) has an electrically operated driving device (16) for producing the rotary movement of the plastic parisons with respect to the longitudinal directions thereof as well as at least one measuring device (18), which at least at times determines at least an electrical characteristic quantity of this driving device (16), wherein the electrical characteristic quantity is selected from a group of characteristic quantities which includes an electrical voltage, an electrical current, an induced voltage, an electromotive force, a counter-electromotive force (EMF), an electrical resistance or the like.

2. System (1) according to claim 1,
**characterised in that**
the device has a first heating device (4) which is arranged along the transport path (P) and which heats the plastic parisons (10) during its transport along the transport path (P).

3. System (1) according to at least one of the preceding claims,
**characterised in that**
the system (1) has a processor device (20) which, on the basis of the characteristic quantity measured by the measuring device (18), outputs a signal which enables a conclusion to be drawn to a rotary movement of the plastic parisons effected by the driving device (16).

4. System (1) according to at least one of the preceding claims,
**characterised in that**
the driving device is designed without an encoder.

5. System (1) according to at least one of the preceding claims,
**characterised in that**
the system (1) has a rotational position detection device (12) which detects a rotational position of the plastic parisons with respect to their longitudinal axis.

6. System (1) according to at least one of the preceding claims,
**characterised in that**
the aligning device has a plurality of motor-powered drives for rotating the plastic parisons (10) with respect to their longitudinal direction.

7. System (1) according to at least one of the preceding claims,
**characterised in that**
the system (1) has a plurality of holding devices (80) for holding the plastic parisons (10).

8. Method for processing containers (10), wherein the containers (10) are held by a plurality of holding devices (80) and are transported along a predetermined transport path (P), wherein the containers (10) are rotated by means of a rotating device (6) with a regard to a rotational position with respect to the longitudinal direction thereof,
**characterised in that**
the rotating device (6) has an electrically operated driving device (16) for producing the rotary movement of the holding devices with the containers (10) arranged thereon with respect to the longitudinal directions of the containers (10), and by means of a measuring device (18) at least one electrical characteristic quantity of this driving device (16) is detected at least at times, wherein the electrical characteristic quantity is selected from a group of characteristic quantities which includes an electrical voltage, an electrical current, an induced voltage, an electromotive force, a counter-electromotive force (EMF), an electrical resistance or the like.

9. Method according to claim 8,
**characterised in that**
on the basis of the electrical characteristic quantity it is determined whether the driving device has generated a desired rotary movement.

10. Method according to at least one of the preceding claims,
**characterised in that**
the electrical characteristic quantity is determined while the driving device is operating at a high rotational speed.

11. Method according to at least one of the preceding claims,
**characterised in that**
the electrical characteristic quantity of the driving device is detected at least at times in a time period in which no container is located on the holding device (80) associated with the driving device (16).

## Revendications

1. Dispositif (1) pour le traitement de contenants (10) avec un dispositif de transport (2) qui transporte les contenants (10) le long d'un trajet de transport prédéterminé (P), dans lequel une pluralité de dispositifs de maintien (80) pour le maintien des contenants (10) est disposée sur le dispositif de transport (2), dans lequel le dispositif présente au moins un dispositif rotatif qui fait tourner les préformes en plastique (10) selon une position de rotation par rapport à leurs directions longitudinales,
**caractérisé en ce que**
le dispositif rotatif (6) présente un dispositif d'entraînement à commande électrique (16) pour générer le mouvement de rotation des préformes en plastique par rapport à leurs directions longitudinales ainsi qu'au moins un dispositif de mesure (18) qui détermine au moins temporairement au moins un paramètre électrique de ce dispositif d'entraînement (16), dans lequel le paramètre électrique est choisi parmi un groupe de paramètres comportant une tension électrique, un courant électrique, une tension induite, une force électromotrice, une force contre-électromotrice (FEM), une résistance électrique ou similaire.

2. Dispositif (1) selon la revendication 1,
**caractérisée en ce que**
le dispositif présente un premier dispositif de chauffage (4) qui est disposé le long du chemin de transport (P) et qui chauffe les préformes en plastique (10) lors de leur transport le long du chemin de transport (P).

3. Dispositif (1) selon au moins l'une des revendications précédentes,
**caractérisé en ce que**
le dispositif (1) présente un dispositif de traitement (20) qui, sur la base du paramètre mesuré par le dispositif de mesure (18), délivre un signal qui permet de tirer une conclusion sur un mouvement de rotation des préformes en plastique provoqué par le dispositif d'entraînement (16).

4. Dispositif (1) selon au moins l'une des revendications précédentes,
**caractérisé en ce que**
le dispositif d'entraînement est conçu sans capteur.

5. Dispositif (1) selon au moins l'une des revendications précédentes,
**caractérisé en ce que**
le dispositif (1) présente un dispositif de détection de position de rotation (12) qui détecte une position de rotation des préformes en plastique par rapport à leur axe longitudinal.

6. Dispositif (1) selon au moins l'une des revendications précédentes,
**caractérisé en ce que**
le dispositif d'alignement présente une pluralité d'entraînements motorisés pour faire tourner les préformes en plastique (10) par rapport à leur direction longitudinale.

7. Dispositif (1) selon au moins l'une des revendications précédentes,
**caractérisé en ce que**
le dispositif (1) présente une pluralité de dispositifs de maintien (80) pour maintenir les préformes en plastique (10).

8. Procédé pour le traitement de contenants (10), dans lequel les contenants (10) sont maintenus avec une pluralité de dispositifs de maintien (80) et sont transportés le long d'un trajet de transport prédéterminé (P), dans lequel les contenants (10) sont mis en rotation au moyen d'un dispositif rotatif (6) selon une position de rotation par rapport à leur direction longitudinale,
**caractérisé en ce que**
le dispositif rotatif (6) présente un dispositif d'entraînement à commande électrique (16) pour générer le mouvement de rotation des dispositifs de maintien avec les contenants (10) disposés dessus par rapport aux directions longitudinales des contenants (10) et au moins un paramètre électrique de ce dispositif d'entraînement (16) est détecté au moins temporairement au moyen d'un dispositif de mesure (18), dans lequel le paramètre électrique est choisi parmi un groupe de paramètres comprenant une tension électrique, un courant électrique, une tension induite, une force électromotrice, une force contre-électromotrice (FEM), une résistance électrique ou similaire

9. Procédé selon la revendication 8,
**caractérisé en ce que**
il est déterminé sur la base du paramètre électrique si le dispositif d'entraînement a généré un mouvement de rotation nominal.

10. Procédé selon au moins l'une des revendications précédentes,
**caractérisé en ce que**
le paramètre électrique est détecté pendant une vitesse élevée du dispositif d'entraînement.

11. Procédé selon au moins l'une des revendications précédentes,
**caractérisé en ce que**
le paramètre électrique du dispositif d'entraînement est détecté au moins temporairement dans une période de temps pendant laquelle il n'y a pas de contenant sur le dispositif de maintien (80) affecté au dispositif d'entraînement (16).
